(19) Europäisches Patentamt
European Patent Office
Office européen des brevets

(11) **EP 1 808 300 A1**

(12) **EUROPEAN PATENT APPLICATION**
published in accordance with Art. 158(3) EPC

(43) Date of publication:
**18.07.2007 Bulletin 2007/29**

(51) Int Cl.:
*B41J 2/52* (2006.01)     *B41J 2/205* (2006.01)
*B41J 2/01* (2006.01)

(21) Application number: **05788225.0**

(22) Date of filing: **29.09.2005**

(86) International application number:
**PCT/JP2005/018038**

(87) International publication number:
**WO 2006/038536 (13.04.2006 Gazette 2006/15)**

(84) Designated Contracting States:
**DE FR GB IT**

(30) Priority: **01.10.2004 JP 2004290085**

(71) Applicant: **Dai Nippon Printing Co., Ltd.**
**Tokyo 162-8001 (JP)**

(72) Inventors:
• **TAMURA, Yoshihiko,**
**c/o DAI NIPPON PRINTING CO. LTD**
**Tokyo 1628001 (JP)**

• **KAMIKUBO, Yoshinori,**
**c/o DAI NIPPON PRINT. CO. LTD**
**Tokyo 1628001 (JP)**
• **OHKUBO, Takayuki,**
**c/o DAI NIPPON PRINTING CO. LTD.**
**Tokyo 1628001 (JP)**

(74) Representative: **Smart, Peter John**
**Beck Greener**
**Fulwood House,**
**12 Fulwood Place,**
**London WC1V 6HR (GB)**

(54) **GRADATION REPRESENTING METHOD AND GRADATION PRINTED MATTER**

(57) A method of representing gradation capable of representing a wide range of high-quality gradation is provided.

A method of representing gradation over a predetermined unit region 1 by changing area ratio of ink to be applied in the unit region 1, wherein the gradation of the unit region 1 is represented by applying a first ink applied at an area ratio of almost 100% in the unit region and applying a second ink with changing area ratio such that the first and second inks are overlaid in the unit region 1.

FIG. 3

**Description**

TECHNICAL FIELD

The present invention relates to a gradation representing method for image and a gradation printed matter.

BACKGROUND ART

The technique for representing gradation of a unit region by changing an area ratio of ink which has a particular transmission density to be applied on the unit region is already known. Also, the technique for representing gradation of a unit region by using similar color inks each of which is different in the transmission density with each other already exists (for example, see a patent document 1).
Patent document 1:
Japanese unexamined patent publication NO.10-324002

DISCLOSURE OF INVENTION

PROBLEM TO BE SOLVED BY INVENTION

However, by the above former technique, a phenomenon called tone jump, where continuity of gradation is lost, is likely to occur in a high area ratio area, and a range of gradation represented by the technique is limited. On the other hand, by the latter technique, the range of gradation gets wider, but the gradation different from the desired gradation might be represented, and the state of uneven print might occur..
Then, the present invention aims to provide a gradation representing method capable of representing a wide range of high-quality gradation and a gradation printed matter.

METHOD TO SOLVE THE PROBLEMS

The present invention solves the above mentioned problems by the following method. Bracketed reference numbers of attached drawings are added to understand the present invention easily, but that does not mean the present invention is limited to an embodiment of the drawings.
A gradation representing method of the present invention is a gradation representing method of a predetermined unit region by changing area ratio of ink to be applied in the unit region, wherein the gradation of the unit region is represented by applying a first ink applied at an area ratio of almost 100% in the unit region and a second ink with changing area ratio are applied overlappedly in the unit region, whereby the above mentioned problem can be solved.
According to the present invention, the area ratio to the unit region of the first ink is almost 100%, the area ratio of the second ink is controlled in accordance with the gradation to be represented, the first ink and the second ink are applied overlappedly, thereby the gradation of the unit region can be represented.
The inventor has found out, the reason why with respect to the gradation representing method by using an ink having a particular transmission density, the tone jump is likely to occur in a high area-ratio part is that a density changing is very large in comparison to a area ratio changing in the high area-ratio part, for it is hard to control area ratio in the high area-ratio part. Moreover, the inventor has found out the reason why with respect to the technique using plural inks, uneven print density is likely to occur, is a part with no ink which occurs by missing to apply the ink at a position where it should be applied
Therefore, in the case where the first ink and the second ink are applied in the unit region as above mentioned, as the first ink is applied at the area ratio of almost 100%, the part with no ink does not occur in the unit region. Thereby, the steady gradation representation can be provided.
"Gradation" of the present invention includes transmission density and reflection density. "Almost 100%" is enough to be close to 100%, and is not required to be precisely 100%. It does not matter whether the first ink and the second ink are different or the same in the transmission density. It does not matter whether either the first ink or the second ink is applied earlier in the unit region, or both of the first ink and the second ink are applied at the same moment.
The first ink and the second ink of the present invention may be similar colors and the transmission density of the first ink may be different from the transmission density of the second ink. Thereby, the degree of gradation changing to the area ratio changing can be controlled. If inks which have an appropriate difference in density are selected, the area ratio can be controlled easily regardless of a gradation range where to represent gradation changing precisely or the other gradation range.

The area ratio of the second ink may change in a range from 0% to 90%. The inventor has found out that it is hard to control area ratio in a range, especially, where the area ratio is more than 90%. Accordingly, this invention can prevent the necessity to control the area ratio of more than 90% for the second ink, therefore, can provide the gradation representing method where the area ratio is easily controlled.

The gradation of the unit region of the present invention may comprise a low density part, a middle density part and a high density part in order of increasing density. The gradation in the low density part may be represented by changing area ratio of a low density ink having comparatively lower density among the different density inks. The gradation in the middle density part may be represented by employing the low density ink as the first ink and employing a high density ink having comparatively higher density as the second ink. The gradation in the high density part may be represented by employing the high density ink as the first ink and the low density ink as the second ink. By using two inks, the gradation of the unit region can be represented smoothly from the low density part to the high density part.

Moreover, the first ink and the second ink may be employed so that gradation at each boundary between the low density part, the middle density part, and the high density part changes in a predetermined range. The inventor found out that the tone jump occurs at a boundary between the density parts because of the transmission densities of the first ink and the second ink. Accordingly, if the first ink and the second ink having appropriate densities are selected, the gradation changing more smoothly can be represented. As the predetermined range, for example, if the difference between the transmission densities at the boundary of the density parts is not more than 0.1, gradation image with almost no tone jump can be obtained.

An gradation printed matter of the present invention is a gradation printed matter where gradation of a predetermined unit region is represented by changing the area ratio of ink printed in the unit region, wherein the gradation of the unit region is represented by printing a first ink at an area ratio of almost 100% and printing a second ink with changing area ratio such that they overlap in the unit region, whereby the above mentioned problem can be solved.

According to the present invention, the gradation printed matter where the gradation of the area unit is represented can be obtained by printing the first ink and the second ink overlappedly. The first ink is printed at the area ratio of almost 100% in the unit region and the area ratio of the second ink is controlled in accordance with the gradation to be represented in the unit region. The explanation of the first ink and the second ink, the method for printing (applying), and a meaning of construction like the above mentioned are as explained above. Also, the explanation of "gradation" and "almost 100%" is as explained above.

EFFECT OF INVENTION

As explained above, according to the present invention, the first ink, which is applied at the area ratio of almost 100%, and the second ink, which is controlled in accordance with the gradation to be represented in the unit region, are applied in the unit region overlappedly, whereby the gradation representing method and the like capable of representing a wide range of high-quality gradation can be provided.

BRIEF DESCRIPTION OF DRAWINGS

FIG.1 a diagram showing an example of a unit region of the present invention.
FIG.2 is a diagram showing the changing in area ratio of ink applied in the unit region for a low density part.
FIG.3 is a diagram showing the changing in area ratio of ink applied in the unit region for a middle density part.
FIG.4 is a diagram showing the changing of area ratio of ink applied in the unit region for a high density part.
FIG.5 is a transmission density table for each density part by inks each of which is different in transmission density from each other.
FIG.6 is a graph showing the changing in area ratio of both a low density ink and a high density ink in the example 1.
FIG.7 is a graph showing the changing in area ratio of both a low density ink and a high density ink in the example 2.
FIG.8 is a graph showing the changing in area ratio of both a low density ink and a high density ink in the example 3.
FIG.9 is a graph showing the changing in area ratio of both a low density ink and a high density ink in the example 4.
FIG.10 is a graph showing the changing in area ratio of both a low density ink and a high density ink in the example 5.
FIG.11 is a graph showing the changing in area ratio of both a low density ink and a high density ink in the example 6.
FIG.12 is a graph showing the changing in area ratio of both a low density ink and a high density ink in the example 7.
FIG.13 is a graph showing the changing in area ratio of a low density ink in the example 8-1.
FIG.14 is a graph showing the changing in area ratio of both a middle density ink and a low density ink in the example 8-2.
FIG.15 is a graph showing the changing in area ratio of both a middle density ink and a high density ink in the example 8-3.

FIG.16 is a graph showing the changing in area ratio of a high density ink in a comparative example 1.

FIG. 17A is a graph showing ideal gradation changing by a gradation representing method where the high density ink and the low density ink in the comparative example 2 are applied not to be overlapped.

FIG. 17B is a graph showing ideal gradation changing in the case where the ink to be applied is shifted by one dot in the gradation representing method showed in FIG. 17A.

FIG.18A is a graph showing ideal gradation changing by a method for representing gradation where the high density ink and the low density ink in the comparative example 3 are applied not to be overlapped.

FIG. 18B is a graph showing ideal gradation changing in the case where the ink to be applied is shifted by one dot in the gradation representing method showed in FIG. 18A.

BEST MODE FOR CARRYING OUT THE INVENTION

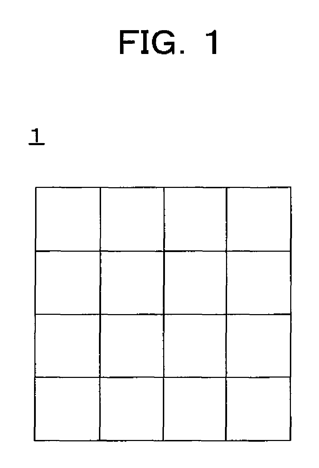

FIG. 1 shows a unit region of the present embodiment. The unit region 1 is one of areas obtained by dividing an image representing gradation into predetermined sizes. For example, in the case of printing an image with a printer, the unit region 1 corresponds to a pixel. In the present invention, a low density ink of transmission density of 0.8 and a high density ink of transmission density of 1.6, each of which has different transmission density from each other, are used as similar color inks, and a gradation representing method from 0 to 2.4 by using the inks. In the present invention, gradation is sometimes represented as transmission density, and called as "transmission density". Divisional lines are added in a reticular line only for convenience of the following description, and the divisional lines are actually invisible.

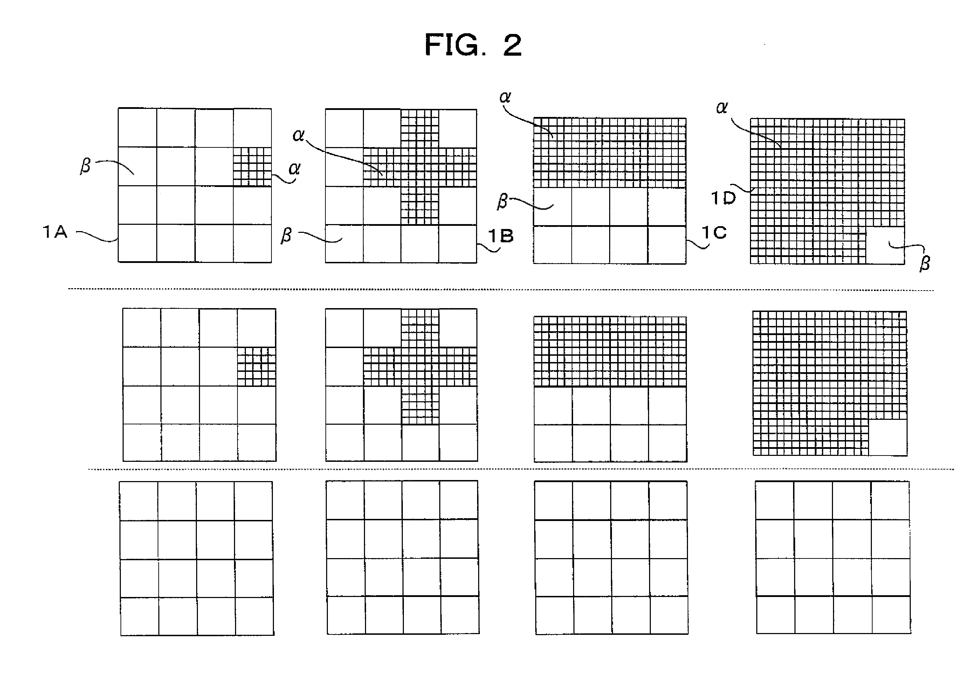

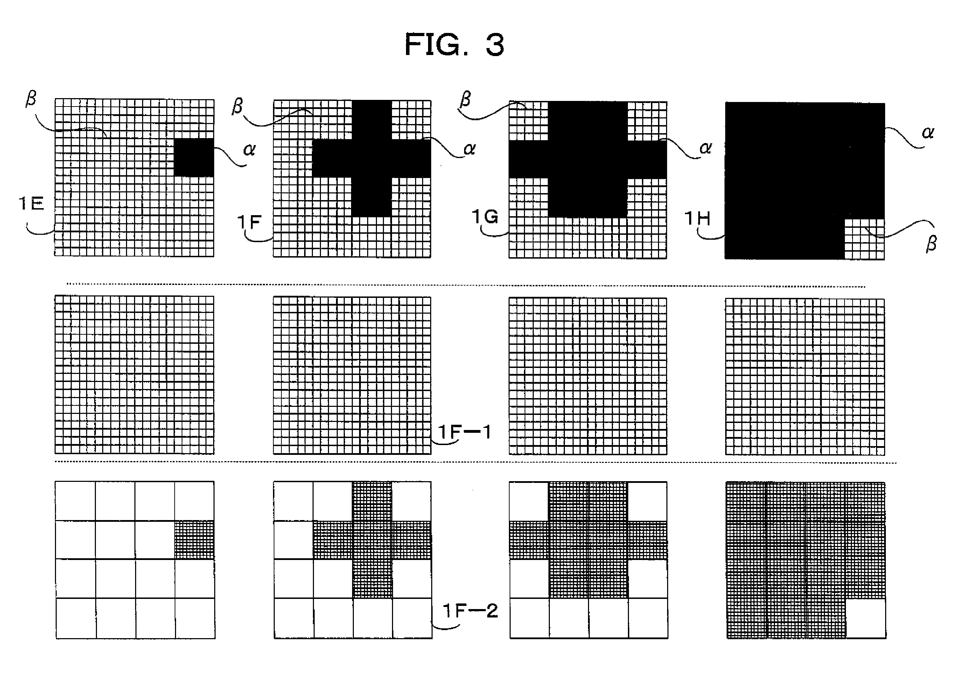

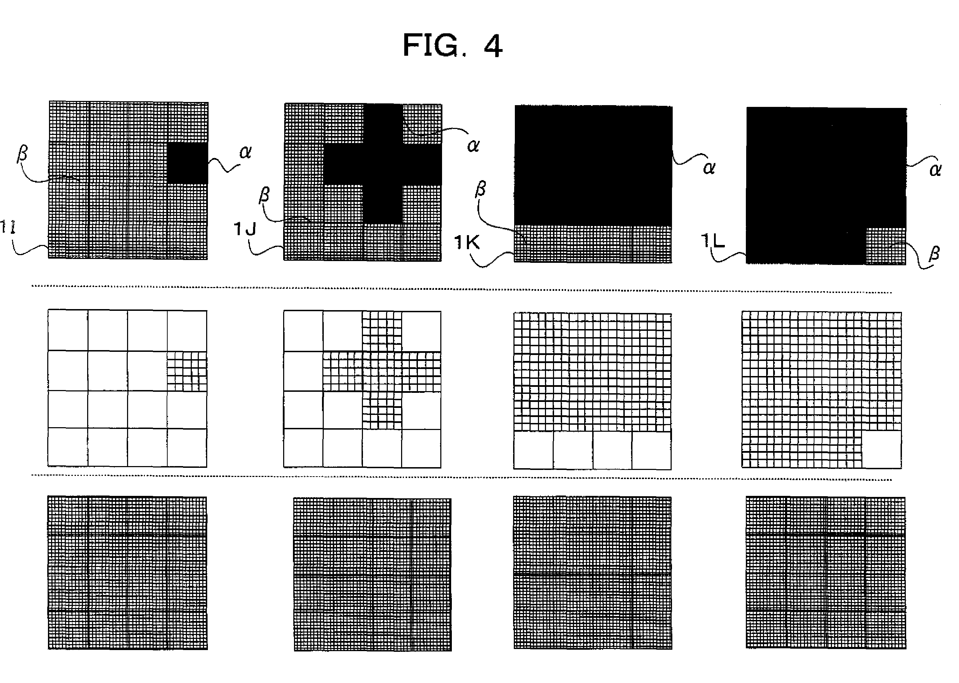

FIGs.2 to 4 are diagrams showing a state where the gradation for the unit region 1 is going to be represented. In the present embodiment, the gradation to be represented by the unit region 1 comprises 3 parts, that is, low density part, middle density part, and high density part. FIG.2 shows the unit regions 1A to 1D representing gradations of low density part, and FIG.3 shows the unit regions 1E to 1H representing gradations of middle density part, and FIG.4 shows the unit regions 1I to 1L representing gradations of high density part. When it is not needed to distinguish the unit regions 1A to 1L, they are referred as the unit region 1.

In common with each of FIGs 2 to 4, the second row shows the state where the low density ink is applied in the unit region 1 at a predetermined area ratio, the third row shows the state where the high density ink is applied in the unit region 1 at a predetermined area ratio, and the first row shows the result of applying overlappedly the low density ink of the second row and the high density ink of the third row. For example, in the case of explaining about the unit region 1F, the unit region 1F-1 where the low density ink is applied at the area ratio of 100% is showed in the second row, the unit region 1F-2 where the high density ink is applied in a cross shape at the predetermined area ratio is showed in the third row, and the unit region 1F where the low density ink of the second row and the high density ink of the third row are applied overlappedly is showed in the first row. In the present embodiment, the low density ink is represented by a rough lattice pattern, and the high density ink is represented by a fine lattice pattern, and the state where the low density ink and the high density ink are applied overlappedly is represented by black color. Actually, the transmission density of part where the inks are applied overlappedly is the sum of the transmission densities of the inks.

Hereinafter, "to apply in the unit region 1" is referred to as "apply", the unit region 1 where the low density ink and the high density ink are applied overlappedly is referred to as "the application result". In the case where a print method is employed as an application method, the application result is formed as a gradation printed matter. Moreover, in the application result, the part where the low density ink and the high density ink are applied overlappedly is referred to as a gradation applied part $\alpha$, the part without the overlap-applied part $\alpha$ is referred to as an all applied part $\beta$. For example, with respect to the above mentioned unit region 1F, the black cross-shaped part colored black is the gradation applied part $\alpha$ and the other part is the all applied part $\beta$.

In each of FIGs. 2 to 4, the application results are arranged so that the transmission density of each application result gets gradually higher from left to right. For example, in FIG. 3, the area ratio of the gradation applied part $\alpha$ gets larger from the unit region 1E toward the unit region 1H, and the transmission density gets higher from the unit region 1E toward the unit region 1H.

The gradation representing method for each density part will be explained. In the low density part, as showed in FIG. 2, the transmission density of the application result is represented by not applying the high density ink, and only by applying the low density ink. The range of the transmission density that the low density part can represent by this method will be explained later. In the low density part, the high density ink is not applied. Therefore, the part where only the low density ink is applied is the gradation applied part $\alpha$, and nothing-applied part is the all applied part $\beta$.

In the middle density part, as showed in FIG. 3, the low density ink is always applied at the area ratio of almost 100% as the first ink. The high density ink is applied as the second ink so that the area ratio to be applied changes in accordance with the gradation to be represented. The range of the transmission density the middle density part can represent by this method will be explained later.

In the high density part, as showed in FIG.4, the high density ink is always applied at the area ratio of almost 100% as the first ink. The low density ink is applied as the second ink so that the area ratio to be applied changes in accordance with the gradation to be represented. The range of the transmission density the high density part can represent by this method will be explained later.

Next, the range of transmission density each density part can represent will be explained. Generally, it is known that the relation between a transmission density and a transmission ratio is formulated as "D=-Log T", when the transmission density is referred to as "T" and the transmission ratio is referred to as "D". In the present invention, based on the formula, when two kinds of transmission density exist in a predetermined range, it is assumed that the transmission ratio of the predetermined range T =S0x10-D0+S1x10-D1 can be established, if the predetermined range having the two kinds of transmission density is sufficiently small. The area ratio of one area is referred to as "S0" and the transmission ratio of one area is referred to as "D0", and the area ratio of another area is referred to as "S1" and the transmission ratio of another area is referred to as "D1" . Then, the transmission density of the predetermined range in the case where two kinds of transmission density in the predetermined range is predicted by the following formula A, and as the result of checking the consistency of the predicted value with the actual value, the formula A can be established.

$$\text{Transmission density} = -\text{Log}(S_0 \times 10^{-D0} + S_1 \times 10^{-D1}) \dots \text{formula A}$$

Accordingly, the transmission density of the unit region 1 having the gradation applied part $\alpha$ and the all applied part $\beta$ each of which has different transmission density from each other can be obtained by the following formula B.

$$\text{Transmission density} = -\text{Log}(10^{-D0} - S(10^{-D0} - 10^{-D1})) \dots \text{formula B}$$

As no ink is applied in the all applied part $\beta$ of the low density part, the transmission density D0 is 0.0. As the low density ink is applied in the gradation applied part $\alpha$ of the low density part, the transmission density D1 is 0.8. Accordingly, particularly in the low density part, the formula B becomes the formula C.

$$\text{Density of low density part} = -\text{Log}(1 - 0.84S) \dots \text{formula C}$$

As the low density ink is applied in the all applied part $\beta$ of the middle density part, the transmission density D0 is 0.8. The high density ink and the low density ink are applied overlappedly in the gradation applied part $\alpha$, the transmission density D1 of the gradation applied part $\alpha$ is obtained by the transmission density of the high density ink + the transmission density of the low density ink, that is, 2.4. Accordingly, particularly in the middle density part, the formula B becomes the formula D.

$$\text{Density of middle density part} = -\text{Log}(0.16 - 0.15S) \dots \text{formula D}$$

Additionally, in the high density part, as the high density ink is applied in the all applied part $\beta$, the transmission density D0 is 1.6. As the high density ink and the low density ink are applied overlappedly in the gradation applied part $\alpha$, the transmission density D1 is 2.4 as above mentioned. Accordingly, particularly in the high density part, the formula B becomes the formula E.

$$\text{Density of high density part} =$$

$$-\text{Log}(0.025-0.021S)....\text{formula E}$$

The area ratio S of the gradation applied part $\alpha$ can change in a range from 0% to 100%. However, as mentioned above, when the area ratio gets over 90%, it becomes hard to control the area ratio, therefore, the higher limit of the area ratio S should be 95% preferably about 90%. When the area ratio S changes in the range 10%$\leqq$ S $\leqq$ 90%, the range of transmission density each density part can represent is the following:

0.04<Low Density<0.61

0.84<Middle Density<1.60

1.64<High Density<2.21

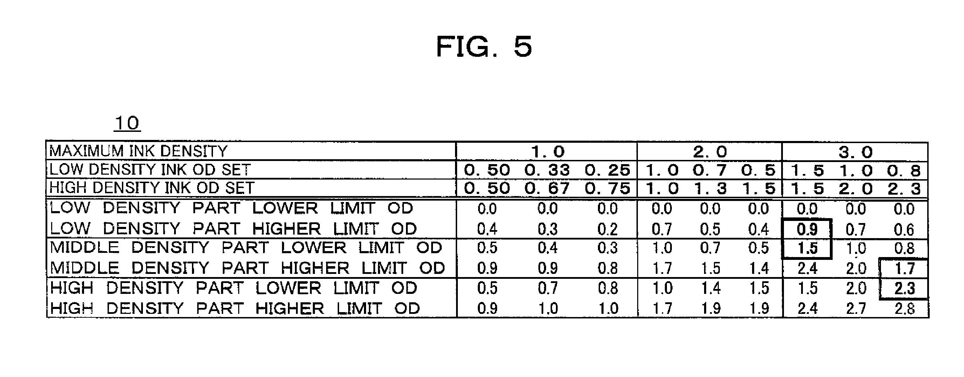

Moreover, with respect to selecting the high density ink and the low density ink, it should be taken account that a tone jump does not occurs at a boundary between the density parts. A case where the tone jump occurs will be explained by using a table of transmission density for each density part 10 showed in FIG. 5. The table of transmission density for each density part 10 is a table indicating transparent densities of the application results when various transmission density inks are used as the high density ink and the low density ink.

The row "LOW DENSITY INK OD SET" indicates the transmission densities set as the low density ink. The row "HIGH DENSITY INK OD SET" indicates the transmission densities sat as the high density ink. The row "LOWER LIMIT OD" of the low density part indicates a range of transmission density which can be represented as the low density part. The value "LOWER LIMIT OD" can be obtained by setting "S" to be "0" in the formula C. The row "HIGHER LIMIT OD" indicates the higher limit of the transmission density which can be represented by the low density part. The value "HIGHER LIMIT OD" can be obtained by setting "S" to be "0.9" in the formula C. For the middle density part, higher limits and lower limits can be obtained by processing in a similar way to the low density part for the formula D, and for the high density part, higher limits and lower limits can be obtained by processing in a similar way to the low density part for the formula E.

For example, in the table of transmission density for each density part 10, in the case where the high density ink OD set and the low density ink OD set are set to be "1.5", the difference between the higher limit OD of the low density part and the lower limit OD of the middle density part is "0.6", which means that the tone jump occurs between the low density part and the middle density part. Also, in the case where the high density ink OD set is 2.3 and the low density ink OD set is 0.8, the difference between the higher limit OD of the middle density part and the lower limit OD of the high density part is 0.6, which means that the tone jump occurs between the middle density part and the high density part.

On the other hand, in the case where the high density ink OD set is 2.0 and the low density ink OD set is 1.0, the tone jump does not occurs outstandingly at the boundary between the density parts. Like this case, it is preferable that a combination of the high density ink and the low density ink is selected not to cause a tone jump at the boundary between the density parts. Additionally, it is preferable that the difference in the transmission density at the boundary between the density parts is not more than "0.1".

Hereinafter, for each color ink of cyan, magenta and yellow, an appropriate combination of the first ink and the second ink to realize the present invention in consideration of the tone jump will be described. The maximum transmission densities of cyan, magenta and yellow are 2.4, 1.5, and 1.0 respectively.

The case will be described where for yellow, the transmission density of the first ink and the transmission density of the second ink are 0.5 respectively, the low density part represents gradation by changing the area ratio of the first ink, and the high density part represents gradation by one layer of the first ink to be applied at the area ratio almost 100% and the area ratio changing of the second ink. One layer of ink means the state that ink is applied to a predetermined area at the area ratio of almost 100% one time. Hereinafter, in accordance with the number of times that ink is applied by almost 100% overlappedly, the state is called as two layers, three layers, and so on. In the case where the area ratio S changes 0% $\leqq$ S $\leqq$ 95%, the maximum transmission density of the low density part is 0.46. This value can be obtained by setting D0=0.0, S0=0.05, D1=0.5 and S1=0.95 in the formula A.

The minimum transmission density of the high density part is 0.50. This value can be obtained by setting D0=0.5, S0=1.0, D1=1.0, S1=0.0 in the formula A. Accordingly, the difference of the transmission densities is 0.04. If the difference between the transmission densities is not more than 0.1, the difference between gradations is sufficiently small, thereby, the gradation image where the tone jump hardly occurs can be obtained. The desired maximum transmission density 1.0 can be obtained by two layers of the first ink. Therefore, it can be determined that the transmission density 0.5 of ink is appropriate to be employed as the first ink and the second ink for the gradation representing method for yellow.

The case will be described where for magenta, the transmission density of the first ink is 0.5, the transmission density of the second ink is 1.0, the low density part represents gradation by changing the area ratio of the first ink, and the high density part represents gradation by one layer of the first ink to be applied at the area ratio of almost 100% and the changing in the area ratio of the second ink. In the case where the area ratio S changes $0\% \leqq S \leqq 95\%$, the maximum transmission density of the low density part is 0.46. This value can be obtained by setting D0=0.0, S0=0.05, D1=0.5 and S1=0. 95 in the formula A.

The minimum transmission density of the high density part is 0.50. This value can be obtained by setting D0=0.5, S0=1.0, D1=1.5, and S1=0.0 in the formula A. Accordingly, the difference between the transmission densities is 0.04. In the case where the difference between the transmission densities is not more than 0.1, the difference in the gradation is sufficiently small, thereby the gradation image where the tone jump hardly occurs can be obtained. Moreover, the desired maximum transmission density 1.5 can be obtained by two layers comprising one layer of the first ink and another layer of the second layer, or three layers of the first layer to be applied at the area ratio of almost 100%. Therefore, it can be determined that the ink of transmission density 0.5 and the ink of transmission density 1.0 are appropriate to be employed as the first ink and the second ink respectively for the gradation representing method for magenta

The case will be described where for cyan, the transmission density of the first ink is 0.6, the transmission density of the second ink is 1.2, the low density part represents gradation by changing the area ratio of the first ink, the middle density part represents gradation by one layer of the first ink to be applied at the area ratio of almost 100% and the area ratio changing of the first ink, and the high density part represents gradation by two layers comprising the first ink to be applied at the area ratio of almost 100% or one layer of the second ink and the area ratio changing of the second ink.

In the case where the area ratio S changes $0\% \leqq S \leqq 95\%$, the maximum transmission density of the low density part is 0 . 54 . This value can be obtained by setting D0=0.0, S0=0.05, D1=0.6 and S1=0. 95 in the formula A. The minimum transmission density of the middle density part is 0.60. This value can be obtained by setting D0=0.6, S0=1.0, D1=1.2, S1=0.0 in the formula A. Accordingly, the difference between the transmission density of the low density part and the transmission density of the middle density part is 0.06.

The maximum transmission density of the middle density part is 1.14. This value can be obtained by setting D0=0.6, S0=0.05, D1=1.2, S1=0.95 in the formula A. The minimum transmission density of the high density part is 1.20. This value can be obtained by setting D0=1.2, S0=1.0, D1=2.4, S1=0.0 in the formula A. Accordingly, the difference between the transmission density of the middle density part and the transmission density of the high density part is 0.06.

If the difference between the transmission densities is not more than 0.1, the difference between gradations is sufficiently small, thereby, the gradation image where the tone jump hardly occurs can be obtained. Moreover, the desired maximum transmission density 2.4 can be obtained by three layers comprising two layers of the first ink to be applied at the area ratio of almost 100% and one layer of the second ink, or two layers of the second ink to be applied at the area ratio of almost 100%. Therefore, it can be determined that the transmission density 0.6 of ink and the transmission density 1.2 of ink are appropriate to be employed as the first ink and the second ink respectively for the gradation representing method for cyan.

The present invention is not only limited to the above embodiment, but also can be executed in various embodiments. For example, the predetermined unit region is not only needed to be rectangular shape, but also can be a predetermined range, a circle shape, a triangle shape and the like, obtained by dividing an image into predetermined ranges. Moreover, a portion where ink is applied is not needed to be rectangular shape. The shape of the portion to be applied is not limited as long as the ink is applied according to a predetermined area ratio. Inks each of which may have the same transmission density as each other, not different transmission density from each other, can be employed as the first ink and the second ink.

EXAMPLE

The present invention will be described more specifically by the following examples.

(EXAMPLE 1)

The high density ink and the low density ink are applied under the following conditions. The transmission densities of the high density ink and the low density ink are set as the following, and the area ratios of the low density ink and the high density ink are made to change so that the transmission density of the application result changes from 0.0 to 2.0 incrementing by 0.2. Firstly, the low density ink is applied by changing the area ratio of the low density ink in accordance with the transmission density to be represented. Next, the low density ink of the area ratio 100% and the high density ink with changing the area ratio in accordance with the transmission density to be represented are applied overlappedly. Moreover, the high density ink of the area ratio 100% and the low density ink with changing the area ratio in accordance with the transmission density to be represented are applied overlappedly.

<The transmission density of ink>

| | |
|---|---|
| The high density ink | 1.40 |
| The low density ink | 0.60 |

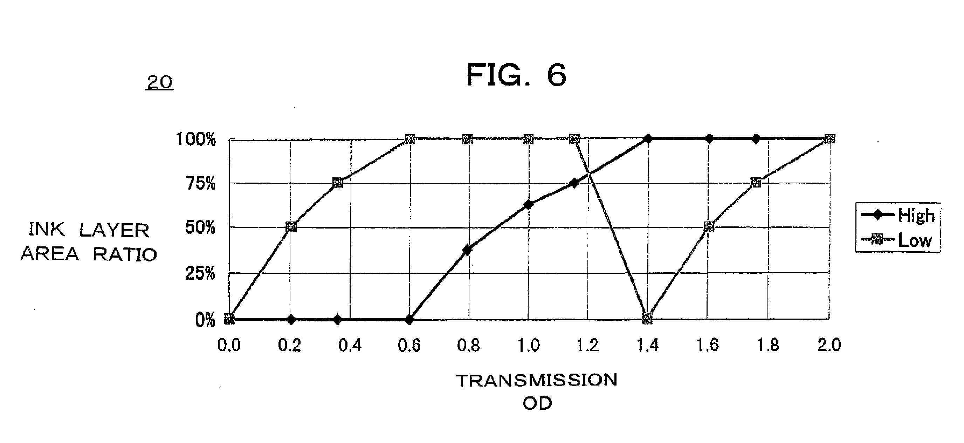

The changing in the area ratio of each ink to the transmission density obtained under the above conditions is shown as a graph 20 in FIG. 6. A lateral axis indicates the transmission density of the application result, and a longitudinal axis indicates the area ratio of ink. "Low" indicates the changing in the low density ink and "High" indicates the changing in the high density ink. The meanings of the lateral axis, the longitudinal axis, "high" and "low" are in common with other graphs. In the graph 20, it can be recognized that the area ratio changes by keeping a certain degree of inclination to the changing in the transmission density.

(EXAMPLE 2)

The high density ink and the low density ink are applied under the following conditions. A range of the transmission density changing of the application result is set from 0 to 2.0, the transmission densities of the high density ink and the low density ink are set to be the same such as the following. Hereinafter, the inks used in this example, as the transmission densities of the inks are the same, are called as only "ink". The area ratio of the ink is made to change so that the transmission density of the application result changes from 0. 0 to 2.0 incrementing by 0.2. Firstly, the ink is applied by changing the area ratio of the ink in accordance with the transmission density to be represented. Next, the ink of the area ratio 100% and the ink, the area ratio with changing the area ratio in accordance with the transmission density to be represented, are applied overlappedly.

<The transmission density of ink>

| | |
|---|---|
| The high density ink | 1.00 |
| The low density ink | 1.00 |

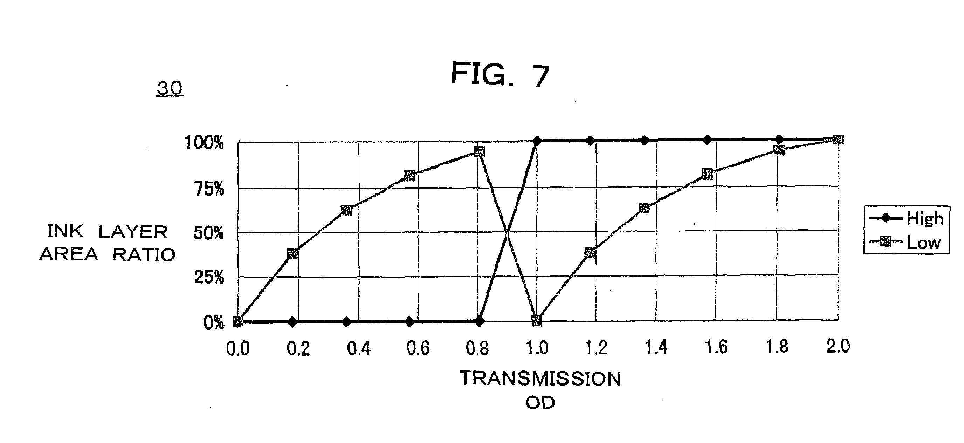

The result of the transmission density of the application result obtained under the above conditions is shown as a graph 30 in FIG. 7. Also, by the graph 30, it can be recognized that the area ratio changes by keeping a certain degree of inclination to the changing in the transmission density.

(EXAMPLE 3)

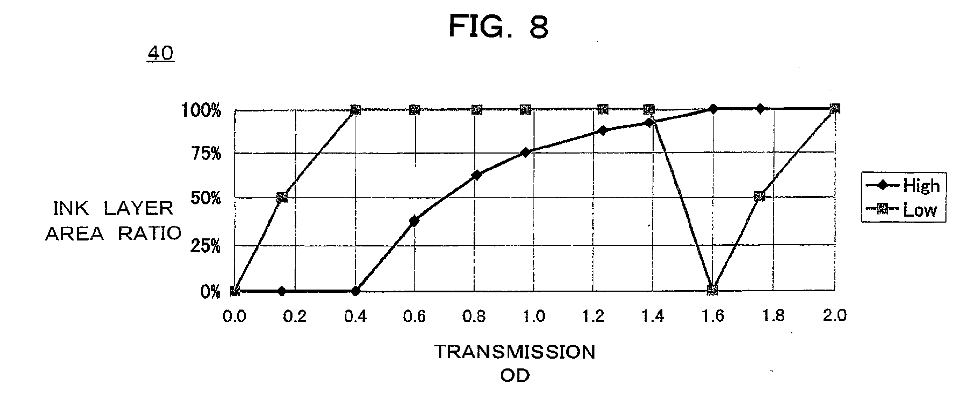

Under the same conditions as Example 1 except for setting the transmission densities of the high density ink and the low density ink as the following values, the application result is obtained. The changing in the area ratio of each ink to the transmission density obtained under these conditions is shown as a graph 40 in FIG. 8. Also, in the graph 40, it can be recognized that the area ratio changes by keeping a certain degree of inclination to the changing in the transmission density. Especially, when the difference between the transmission densities of the inks is big like this example, the area ratio changing to the gradation changing becomes big in a range from 0 to the transmission density of the low density ink and a range over the transmission density of the high density ink.

<The transmission density of the ink>

| | |
|---|---|
| The high density ink | 1.40 |
| The low density ink | 1.60 |

(EXAMPLE 4)

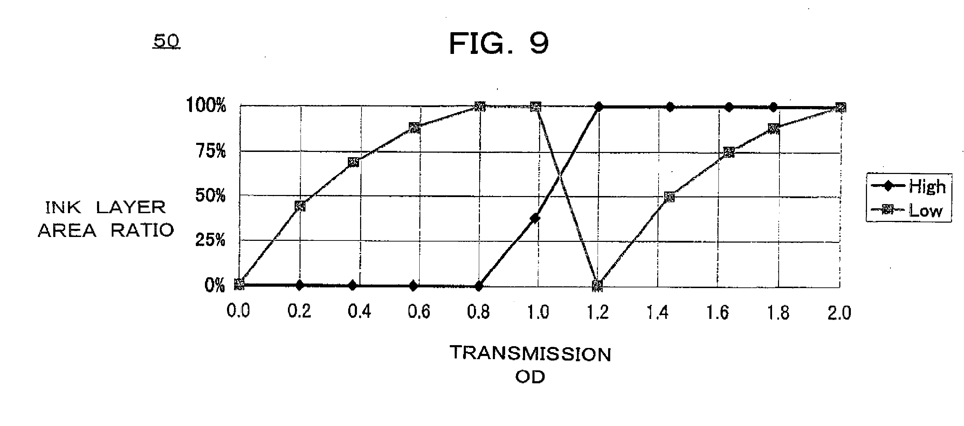

Under the same conditions as Example 1 except for setting the transmission densities of the high density ink and the low density ink to be the following values, the application result is obtained. The changing in the area ratio of each ink to the transmission density obtained under these conditions is shown as a graph 50 in FIG. 9. Also, in the graph 50, it can be recognized that the area ratio changes by keeping a certain degree of inclination to the changing in the transmission density. Especially, when the difference between the transmission densities of the inks is small like this example, the area ratio changing to the gradation changing becomes big in a range over the transmission density of the low density ink to the transmission density of the high density ink.

<The transmission density of the ink>

|  |  |
|---|---|
| The high density ink | 1.20 |
| The low density ink | 0.80 |

(EXAMPLE 5)

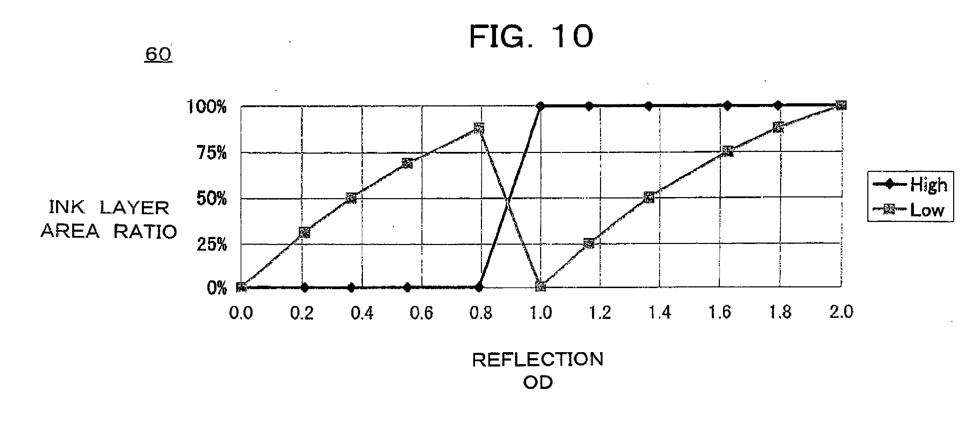

Under the same conditions as Example 2 except for setting the transmission densities of the high density ink and the low density ink as the following values, the area ratio changing to reflection density is measured. The changing in the area ratio of each ink to the reflection density is shown as a graph 60 in FIG. 10. Graph 60 shows a similar curve to the graph 30 for the transmission density. Therefore, also for the reflection density, the area ratio changes by keeping a certain degree of inclination to the density changing like the case of the transmission density.

<The transmission density of the ink>

|  |  |
|---|---|
| The high density ink | 0.50 |
| The low density ink | 0.50 |

(EXAMPLE 6)

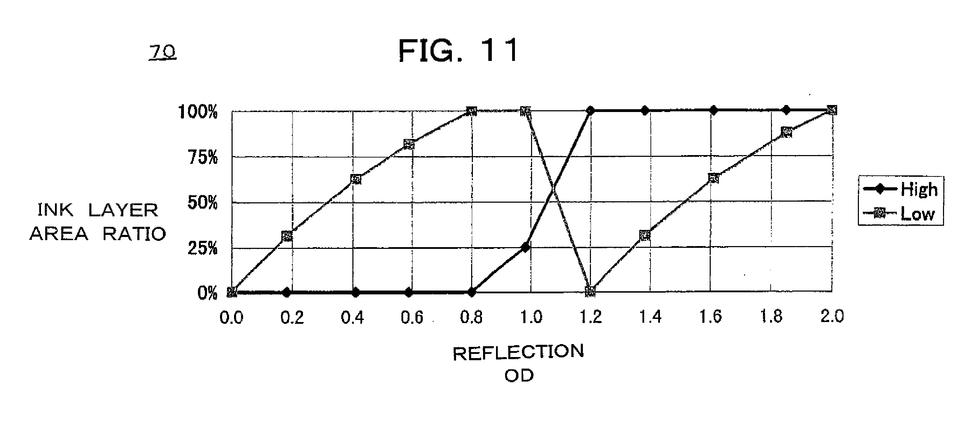

Under the same conditions as Example 4 except for setting the transmission densities of the high density ink and the low density ink as the following values, the area ratio changing to reflection density is measured. The changing in the area ratio of each ink to the reflection density is shown as a graph 70 in FIG. 11. Graph 70 shows a similar curve to the graph 50 for the transmission density. Therefore, also for the reflection density, the area ratio changes by keeping a certain degree of inclination to the density changing like the case of the transmission density. Especially, when the difference between the transmission densities of the inks is small like this example, the area ratio changing to the gradation changing becomes big in a range over the density two times transmission density of the low density ink to the density two times transmission density of the high density ink.

<The transmission density of the ink>

|  |  |
|---|---|
| The high density ink | 0.6 |
| The low density ink | 0.4 |

(EXAMPLE 7)

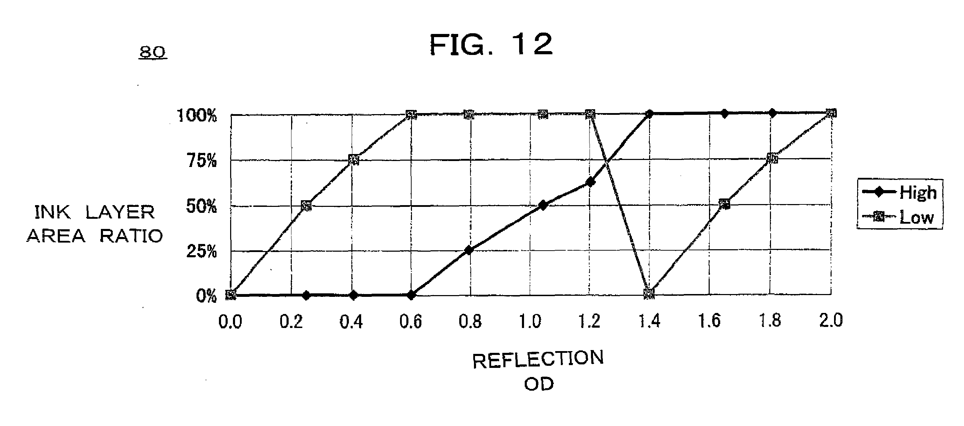

Under the same conditions as Example 1 except for setting the transmission densities of the high density ink and the low density ink as the following values, the area ratio changing to reflection density is measured. The changing in the area ratio of each ink to the reflection density is shown as a graph 80 in FIG. 12. Graph 80 shows a similar curve to the graph 20 for the transmission density. Therefore, also for the reflection density, the area ratio changes by keeping a certain degree of inclination to the density changing like the case of the transmission density.

(Example 8-1)

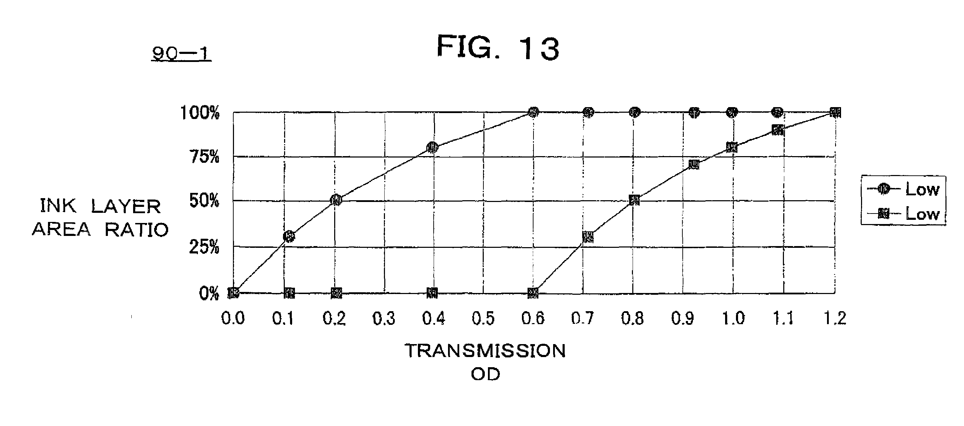

The low density ink is applied under the following conditions. A range of gradation changing of application result is especially set to be a range from 0 to 1.2 in the low density part, and the low density ink of the transmission density 0.6 is used. So that the transmission density of application result changes from 0.0 to 1.2 incrementing by 0.1, first, the low density ink is applied by changing the area density of the low density ink in accordance with the transmission density to be represented from 0, and in the transmission density part over 0. 6, the low density ink of area ratio 100% and the low density ink with changing the area ratio in accordance with the transmission density to be applied are applied overlappedly. The result of transmission density of the application result obtained under the above conditions is shown as a graph 90-1 in FIG. 13. Both of the two graphs showed in the graph 90-1 indicate the changing in the area ratio of the low density ink. In the range from the gradation 0.0 to 1.2, the area ratio of the low density ink changes gradually.

(EXAMPLE 8-2)

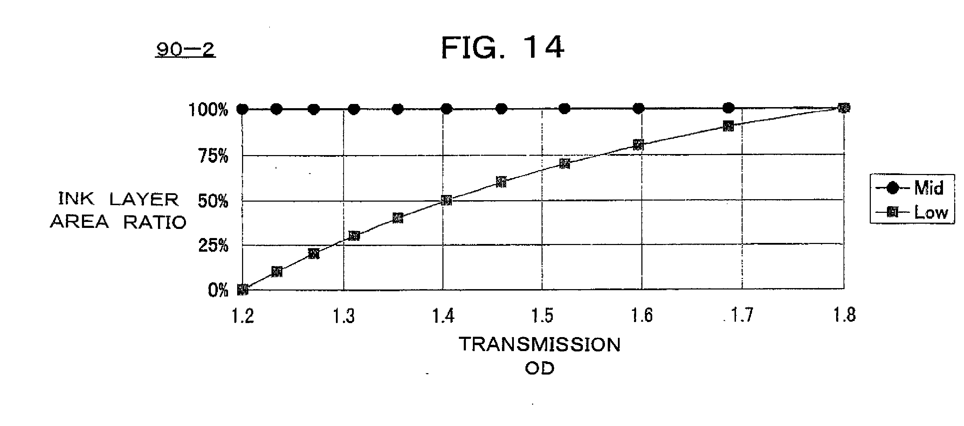

The low density ink and the middle density ink are applied under the following conditions. A range of gradation changing of application result is especially set to be a range from 1.2 to 1.8 in the middle density part, and the middle density ink of the transmission density 1.2 and the low density ink of the transmission density 0.6 are used. So that the transmission density of application result changes from 1.2 to 1.8 incrementing by 0.1, the middle density ink of the area ratio 100% and the low density ink with changing the area ratio in accordance with the density to be represented are applied overlappedly. The result of transmission density of the application result obtained under the above conditions is shown as a graph 90-2 in FIG. 14. "Low" indicates the changing in area ratio of the low density ink and "Mid" indicates the changing in area ratio of the middle density ink. In the range from the gradation 1.2 to 1.8, the area ratio of the low density ink changes gradually.

(EXAMPLE 8-3)

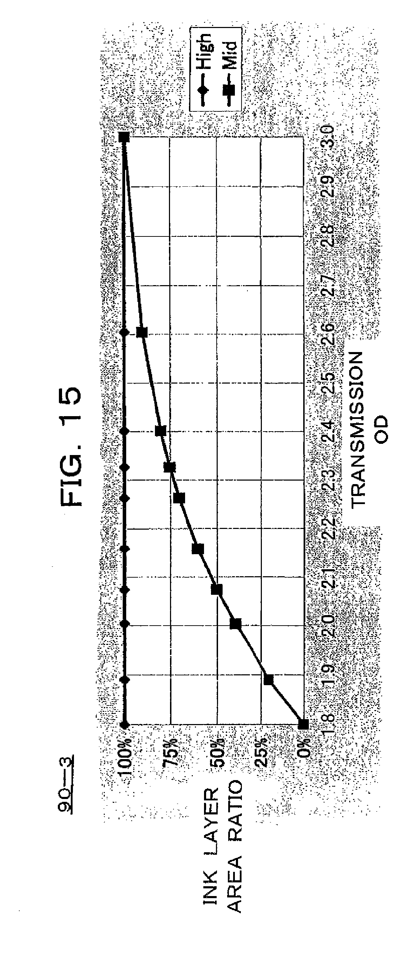

The middle density ink and the high density ink are applied under the following conditions. A range of gradation changing of application result is especially set to be a range from 1.8 to 3.0 in the high density part, and the high density ink of the transmission density 1.8 and the middle density ink of the transmission density 1.2 are used. So that the transmission density of application result changes from 1.8 to 3.0 incrementing by 0.1, the high density ink of the area ratio 100% and the middle density ink with changing the area ratio in accordance with the density to be represented are applied overlappedly. The result of transmission density of the application result obtained under the above conditions is shown as a graph 90-3 in FIG. 15. "High" indicates the changing in area ratio of the high density ink and "Mid" indicates the changing in area ratio of the middle density ink. In the range from the gradation 1.8 to 3.0, the area ratio of the middle density ink changes gradually.

(COMPARATIVE EXAMPLE 1)

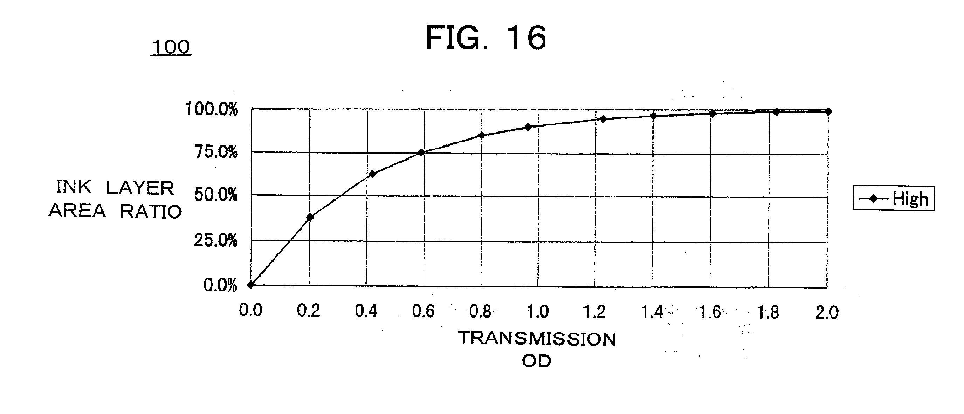

One kind of ink is applied under the following conditions . Only the high density ink of the transmission density 2.0 is used. So that the transmission density of application result changes from 0.0 to 2.0 incrementing by 0.2, the area ratio of the high density is made to change. The result of transmission density of the application result obtained under the above conditions is shown as a graph 100 in FIG. 16. Over the transmission density 1.0, the changing in the area ratio is very small to the changing in the transmission density, which means that it is hard to control the area ratio in the range of the transmission density from 1.0 to 1.2.

(COMPARATIVE EXAMPLE 2)

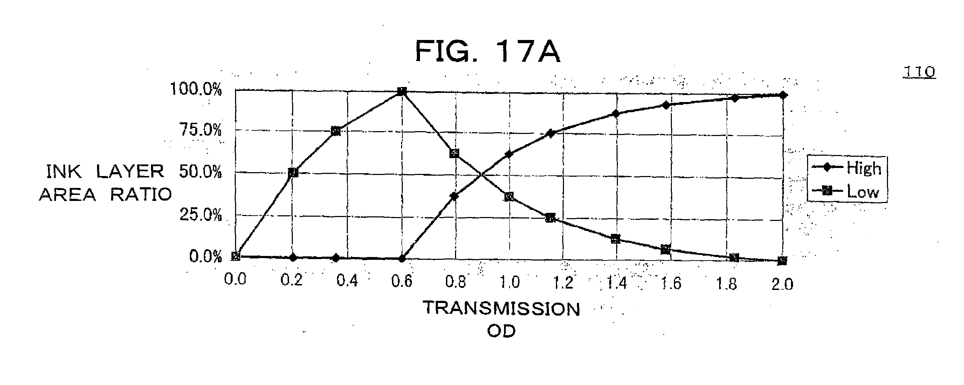

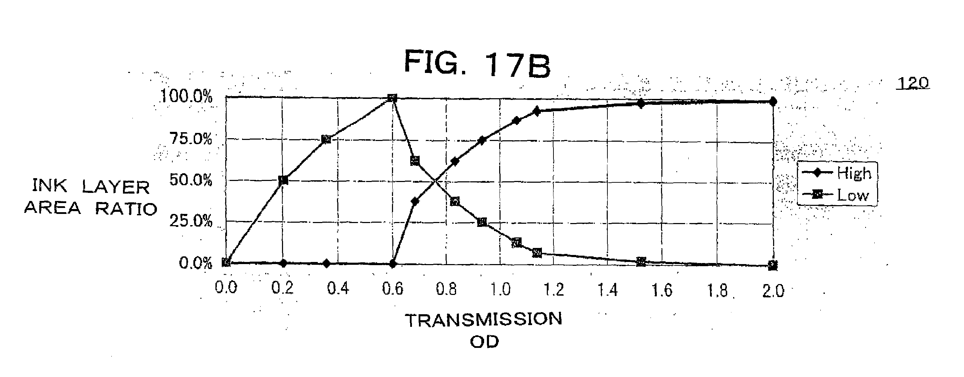

The low density ink of the transmission density 0.6 and the high density ink of the transmission density 2. 0 are applied under the following conditions. The state is showed as a graph 110 in FIG.17A, where an ideal gradation changing is represented by changing the area ratio of the two inks so that both of the two inks are applied to eliminate overlap with each other and a sum of the area ratio of the inks keeps 100% in a density part to be represented by using the two inks. According to this area ratio changing, the state of gradation changing is showed in a graph 120 in FIG. 17B, where the ink is applied shifted by one dot. The area ratio changing is bigger in the range of the transmission density of application result from 0.6 to 1.0 than in the range of the transmission density from 1.0 to 2.0. The changing amount of transmission density to the changing amount of area ratio is not constant. Therefore, by the gradation representing method where two inks are applied to eliminate overlap with each other, a desired gradation changing can not be obtained if the ink is applied shifted only by one dot.

(COMPARATIVE EXAMPLE 3)

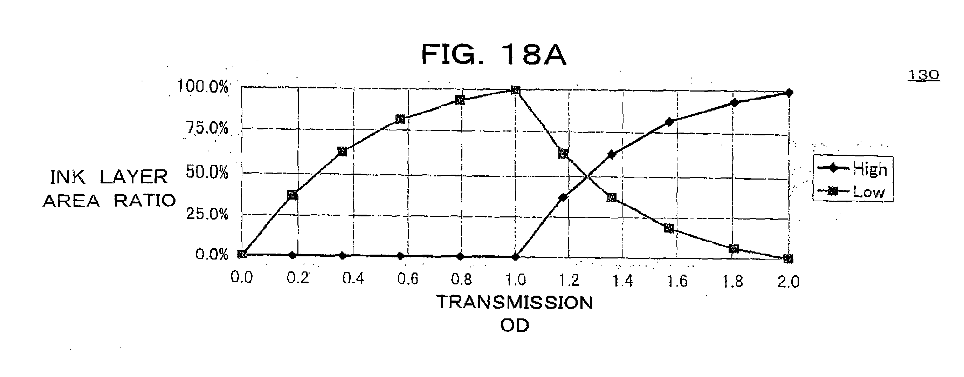

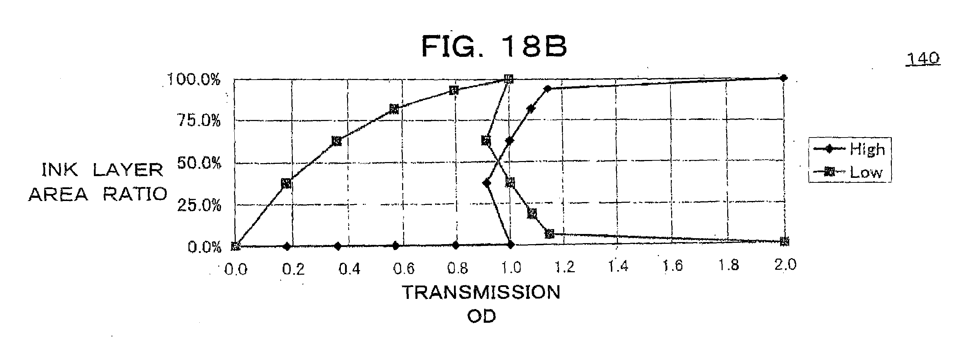

The low density ink of the transmission density 1.0 and the high density ink of the transmission density 2. 0 are applied under the following conditions. The state is showed as a graph 130 in FIG. 18A, where an ideal gradation changing is represented by changing the area ratio of the two inks so that both of the two inks are applied to eliminate overlap with each other and a sum of the area ratio of the inks keeps 100% in a density part to be represented by using the two inks. According to these area ratio changing, the state of gradation changing is showed in a graph 140 in FIG. 18B, where the ink is applied to be shifted by one dot. The area ratio changing is bigger in a range of the transmission density of application result from 0.8 to 1.2 than in a range of the transmission density from 1.2 to 2.0. The changing amount of transmission density to the changing amount of area ratio is not constant. Moreover, in a range of the transmission density from 0.8 to 1.2, the transmission density changing is not proportional to the area ratio changing. Therefore, similar to the comparative example 2, by the gradation representing method where two inks are applied to eliminate overlap with each other, a desired gradation changing can not be obtained when the ink is applied to be shifted only by one dot.

## Claims

1. A method of representing gradation over a predetermined unit region by changing area ratio of ink to be applied in the unit region, wherein
   the gradation over the unit region is represented by applying a first ink applied at an area ratio of almost 100% in the unit region and applying a second ink with changing area ratio such that the first and second inks are overlaid in the unit region.

2. The method of representing gradation according to claim 1, wherein
   the first ink and the second ink are similar colors and transmission density of the first ink is different from transmission density of the second ink.

3. The method of representing gradation according to claim 1 or 2, wherein
   the area ratio of the second ink changes within a range from 0% to 90%.

4. The method of representing gradation according to claim 3, wherein
   the gradation over the unit region comprises a low density part, a middle density part and a high density part in order of increasing density,
   the gradation in the low density part is represented by changing area ratio of a low density ink having comparatively lower density among the different density inks,
   the gradation in the middle density part is represented by employing the low density ink as the first ink and employing a high density ink having comparatively higher density as the second ink,
   the gradation in the high density part is represented by employing the high density ink as the first ink and the low density ink as the second ink.

5. The method of representing gradation according to claim 4, wherein
   the first ink and the second ink are employed so that gradation at each boundary between the low density part, the middle density part, and the high density part changes in a predetermined range.

6. A gradation printed matter where gradation of a predetermined unit region is represented by changing area ratio of ink printed in the unit region, wherein
   the gradation of the unit region is represented by a first ink printed at an area ratio of almost 100% and a second ink with changing area ratio printed such that the first and second inks are overlaid in the unit region.

# FIG. 1

<u>1</u>

# FIG. 2

FIG. 3

1E  1F  1G  1H

1F-1  1F-2

α  β

# FIG. 4

EP 1 808 300 A1

# FIG. 5

<u>10</u>

| MAXIMUM INK DENSITY | 1.0 | | | 2.0 | | | 3.0 | | |
|---|---|---|---|---|---|---|---|---|---|
| LOW DENSITY INK OD SET | 0.50 | 0.33 | 0.25 | 1.0 | 0.7 | 0.5 | 1.5 | 1.0 | 0.8 |
| HIGH DENSITY INK OD SET | 0.50 | 0.67 | 0.75 | 1.0 | 1.3 | 1.5 | 1.5 | 2.0 | 2.3 |
| LOW DENSITY PART LOWER LIMIT OD | 0.0 | 0.0 | 0.0 | 0.0 | 0.0 | 0.0 | 0.0 | 0.0 | 0.0 |
| LOW DENSITY PART HIGHER LIMIT OD | 0.4 | 0.3 | 0.2 | 0.7 | 0.5 | 0.4 | 0.9 | 0.7 | 0.6 |
| MIDDLE DENSITY PART LOWER LIMIT OD | 0.5 | 0.4 | 0.3 | 1.0 | 0.7 | 0.5 | 1.5 | 1.0 | 0.8 |
| MIDDLE DENSITY PART HIGHER LIMIT OD | 0.9 | 0.9 | 0.8 | 1.7 | 1.5 | 1.4 | 2.4 | 2.0 | 1.7 |
| HIGH DENSITY PART LOWER LIMIT OD | 0.5 | 0.7 | 0.8 | 1.0 | 1.4 | 1.5 | 1.5 | 2.0 | 2.3 |
| HIGH DENSITY PART HIGHER LIMIT OD | 0.9 | 1.0 | 1.0 | 1.7 | 1.9 | 1.9 | 2.4 | 2.7 | 2.8 |

EP 1 808 300 A1

EP 1 808 300 A1

## FIG. 6

20

INK LAYER
AREA RATIO

TRANSMISSION
OD

High
Low

# FIG. 8

40

INK LAYER AREA RATIO (y-axis): 0%, 25%, 50%, 75%, 100%

TRANSMISSION OD (x-axis): 0.0, 0.2, 0.4, 0.6, 0.8, 1.0, 1.2, 1.4, 1.6, 1.8, 2.0

Legend: ◆ High, ▨ Low

EP 1 808 300 A1

FIG. 9

50

INK LAYER
AREA RATIO

TRANSMISSION
OD

High
Low

EP 1 808 300 A1

FIG. 10

EP 1 808 300 A1

**FIG. 11**

<u>70</u>

INK LAYER
AREA RATIO

REFLECTION
OD

Legend: High, Low

EP 1 808 300 A1

## FIG. 12

80

INK LAYER AREA RATIO

REFLECTION OD

High
Low

# FIG. 13

INK LAYER
AREA RATIO

TRANSMISSION
OD

Legend:
- —Low
- —Low

EP 1 808 300 A1

EP 1 808 300 A1

90—2

# FIG. 14

INK LAYER
AREA RATIO

TRANSMISSION
OD

Legend:
- ●— Mid
- ▦— Low

# FIG. 15

EP 1 808 300 A1

# FIG. 16

EP 1 808 300 A1

100

# FIG. 17A

EP 1 808 300 A1

FIG. 17B

# FIG. 18A

INK LAYER AREA RATIO (y-axis): 0.0%, 25.0%, 50.0%, 75.0%, 100.0%

TRANSMISSION OD (x-axis): 0.0, 0.2, 0.4, 0.6, 0.8, 1.0, 1.2, 1.4, 1.6, 1.8, 2.0

Legend: High, Low

EP 1 808 300 A1

# FIG. 18B

EP 1 808 300 A1

## INTERNATIONAL SEARCH REPORT

| International application No. |
| --- |
| PCT/JP2005/018038 |

A. CLASSIFICATION OF SUBJECT MATTER
*B41J2/52* (2006.01), *B41J2/205* (2006.01), *B41J2/01* (2006.01)

According to International Patent Classification (IPC) or to both national classification and IPC

B. FIELDS SEARCHED

Minimum documentation searched (classification system followed by classification symbols)
*B41J2/52* (2006.01), *B41J2/205* (2006.01), *B41J2/01* (2006.01), *H04N1/23* (2006.01)

Documentation searched other than minimum documentation to the extent that such documents are included in the fields searched

| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 11-115222 A (Seiko Epson Corp.), 27 April, 1999 (27.04.99), Par. Nos. [0078] to [0084]; Figs. 7 to 9 (Family: none) | 1-6 |
| A | JP 6-270421 A (Canon Inc.), 27 September, 1994 (27.09.94), Par. Nos. [0059]; Fig. 15(a) & US 006027196 A1 & EP 000606022 A1 & DE 069331682 T & CN 001096251 A & KR 000148258 B & AT 000214529 T | 1-3,6 |

☐ Further documents are listed in the continuation of Box C.     ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25 October, 2005 (25.10.05) | 01 November, 2005 (01.11.05) |

| Name and mailing address of the ISA/ | Authorized officer |
| --- | --- |
| Japanese Patent Office | |
| Facsimile No. | Telephone No. |

Form PCT/ISA/210 (second sheet) (April 2005)

**EP 1 808 300 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10324002 A